# EUROPEAN PATENT APPLICATION

(11) **EP 1 463 209 A2**
(43) Date of publication of application: **29.09.2004**
(21) Application number: 04251733.4
(22) Date of filing: 25.03.2004
(51) Int. Cl.: H04B 1/10

(54) **Apparatus and method for the avoidance of RF interference**

(30) Priority: 29.03.2003 GB 0307325
(71) Applicant: Pace Micro Technology PLC, Shipley, West Yorkshire BD18 3LF (GB)
(72) Inventor: Fawcett, Darren, Saltaire, Shipley BD18 3LF (GB)
(74) Representative: Wood, Graham

(57) **Abstract**

The invention relates to the provision of apparatus and a method for the tuning to one of a range of radio frequency signals to receive data which can subsequently be used to generate a radio or television channel selected by the user of the apparatus. The bit error rate of the output of the received radio frequency signal is monitored and, if the bit error rate exceeds the predefined bit error rate limit the apparatus is retuned to a frequency which is equivalent to the selected radio frequency signal plus or minus an offset frequency value. The bit error rate is thereafter monitored and an increase in the offset can be used if required. The invention allows a reduction in data errors which may be caused by interference from other apparatus.

## Description

The invention which is the subject of this application relates to the provision of apparatus designed to receive data signals from a remote location via radio frequency (RF) transmissions.

In particular, the invention is provided to avoid the possibility of interference being experienced by said apparatus from other unwanted, radio frequency signals i.e. those signals which do not carry the required data signals but do interfere with the operation of the apparatus in receiving the wanted RF data signals.

Conventionally, apparatus to receive radio frequency signals, such as, for example, broadcast data receivers receive, from satellite transmissions, data signals transmitted at a range of frequencies from which data can be processed by the broadcast data receiver to generate video and/or audio. Said apparatus has conveniently been housed within a metal casing, typically cuboid in shape. In addition to preventing physical damage to the components of the apparatus, the metal casing also acts as a shield to prevent radio frequency signals which may be weaker but which can still be received by the apparatus, from actually being picked up by the apparatus and therefore prevent the same from interfering with the normal operation and processing of the wanted radio frequency signals.

There has, more recently, been increasing pressure to improve the aesthetic appeal of apparatus of this type and, as a result, it is found that apparatus increasingly is being housed within moulded plastic housings rather than metal housings. While this can improve the possibilities for aesthetic design of the apparatus, it does reduce the level of shielding from unwanted radio frequency signals. The reception of unwanted radio frequency signals can cause the breakdown in processing the data from wanted radio frequency signals and in turn, cause a reduction in the performance of the apparatus to the user such as, for example, the video and/or audio which is reproduced can include errors therein causing break up of the video picture and/or audio and therefore be to the detriment of the user.

The aim of the present invention is to provide a method of avoiding or minimising the effect of unwanted radio frequency signals and to do so to an extent which allows either metal or plastic housings to be used without unduly effecting the performance of the apparatus in question in processing data from a remote location.

In a first aspect of the invention there is provided apparatus for the reception of data transmitted to the apparatus over any of a range of radio frequency signals within a known frequency band or bands, said radio frequency signal selectable by the apparatus in response to a user selection of a television or radio channel to be generated by the apparatus from the received data, said apparatus including a tuner to tune to the selected radio frequency signal and characterised in that the bit error rate output of the data carried by the selected radio frequency signal is monitored and, if the said bit error rate exceeds, during reception, a predefined bit error rate limit, a control means introduces an offset frequency value for the selected radio frequency signal and the apparatus is then operated to tune to a frequency equivalent to the selected radio frequency signal plus or minus said offset frequency value

Typically, upon retuning to the frequency including the offset, the bit error rate is continued to be monitored so as to ensure that the same returns to a level below the predefined value.

In one embodiment, the predefined value for the bit error rate is 2e-04.

In one embodiment tuning apparatus is used to tune to radio frequencies within the standard DVB IF band for satellite tuners and the possible interference signals can be generated via GSM or DECT systems but may also include WLAN devices and any other devices which operate at relatively close frequencies.

In one embodiment, the apparatus includes at least one LNB and, in one embodiment, the LNB upon receiving a signal to be tuned, is moved from a low band frequency range to a high band frequency range or vice versa. In a further embodiment, if the LNB is a multiband or programmable LNB then, upon the bit error rate exceeding a predefined level, the LNB is either pre-programmed to a wanted channel frequency plus or minus the fixed offset value or alternatively, another LNB band is used whilst maintaining the requirement of using an IF between 950MHz to 2150MHz and in each case, the tuner is tuned to the new frequency. In this embodiment, once the retuning has occurred, a check can be made to ensure that the intermediate frequency band is between 950MHz and 2,150MHz.

In a further embodiment, the offset value is initially set at a minimum value and added or subtracted from the original frequency and the apparatus re-tuned to the new frequency. If the bit error rate then drops to below the predefined level, no further action is required. However, if the bit error rate still exceeds the predefined level then successive increases in the offset value are made, the apparatus re-tuned and the bit error rate re-checked at each step increase until the bit error rate value falls below the predefined level.

In a further aspect of the invention there is provided apparatus for the reception of data, said data transmitted to the apparatus at a range of radio frequency signals within a known frequency band or bands, said radio frequency signals selectable by the apparatus in response to a user selecting, said apparatus including a tuner to tune to the selected signal and wherein the bit error rate output is monitored and, if the said bit error rate exceeds, during operation, a predefined limit, the apparatus introduces an offset to the required frequency and tunes to the wanted frequency plus or minus said offset.

In a yet further aspect of the invention there is provided a method for the control of apparatus to tune to a selected radio frequency signal in a range of receivable radio frequency signals to receive data carried by the said signal, said method comprising the steps of;
selecting the radio frequency signal to be received as that which carries data required for the generation of a user selected radio or television channel;
controlling the apparatus to tune to said selected radio frequency signal;
when tuned and the selected frequency signal is received, monitoring the bit error rate output of the data received from the selected radio frequency and characterised in that;
if the said bit error rate output is the same or less than a predefined bit error rate limit the apparatus continues to receive the selected radio frequency signal; and
if the said bit error rate output is greater than a predefined bit error rate limit, control means for the apparatus introduces an offset frequency value to the selected radio frequency signal and the apparatus is then operated to tune to a radio frequency equivalent to the selected radio frequency signal plus or minus said offset frequency value.

In one embodiment upon retuning to the frequency including the offset frequency value, the bit error rate is monitored and if the bit error rate value is within the predefined bit error rate limit the tuner continues to tune to the frequency value including the offset frequency value. If the bit error rate still exceeds the predefined bit error rate limit then successive increases in the offset value are made, the apparatus re-tuned and the bit error rate re-checked at each increase and this is continued until the bit error rate is at or less than the predefined bit error rate value.

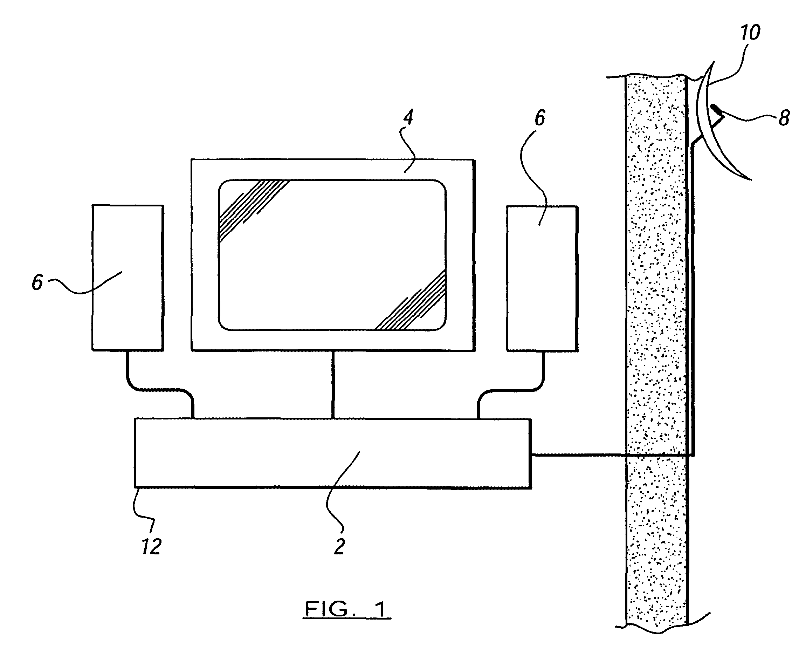

Specific embodiments of the invention will now be described with reference to the accompanying drawings, wherein:-
Figure 1 illustrates in schematic fashion an embodiment of apparatus with which the invention can be utilised.
Figure 1 illustrates apparatus for the reception of satellite data transmissions. The apparatus comprises a broadcast data receiver 2 which is connected typically via cables or a wireless network to a display screen 4 and speakers 6. Data which is received by the broadcast data receiver 2, is processed in the same and typically, from that data, video is generated for display on the screen 4 and audio is processed through speakers 6.

The data received by a broadcast data receiver is transmitted via a satellite system on a number of radio frequencies, said radio frequencies each carrying data for a particular television channel or channels or auxiliary services. Each of the radio frequency signals lie within a given band such as, for example, 950 - 2,150 MHz. The required frequencies on which the data for processing by the broadcast data receiver 2 are known and therefore, as a result, the user can interact with the broadcast data receiver to, for example, select a particular channel which they wish to view and/or listen to. Upon that selection being made, the broadcast data receiver 2, which includes at least one tuner therein, tunes to the particular radio frequency signal and a low noise block 8, provided as part of the satellite antenna 10 external of the premises but connected to the broadcast data receiver is set to a particular operating condition to receive that radio frequency signal to which the tuner has been set. The data carried on that particular signal is thereafter transferred to the broadcast data receiver from the satellite antenna and processed to generate the appropriate channel.

This system is well known and generally operates efficiently. A problem which is experienced however is that certain other apparatus which is operated within the vicinity of the broadcast data receiver may cause interference in that the said other apparatus such as, for example, DECT phones or mobile phones operating using a GSM network, use frequencies which are within the frequency range of the broadcast data receiver and therefore when, for example, a telephone call is made via a mobile phone or DECT system, the radio frequency used for that and the data carried on that particular frequency, can be sufficiently close to radio frequency signals used for a particular channel at the broadcast data receiver to allow interference to occur. The risk of this interference is increased by the use of plastic housings 12.

In accordance with a first embodiment of the invention, when a particular radio frequency is selected following a user selection, and the broadcast data receiver is connected to a conventional LNB which can be moved between low and high band operation, then if the broadcast data receiver is used in the vicinity of, for example, a GSM or mobile phone, the following can occur in accordance with the invention.

GSM typically covers the frequency band 890-960MHz and 1710MHz-1876.5MHz, which falls near the top of the DVB satellite IF band. During a call to/from a GSM handset the radiated power from a GSM phone can range from 20mW to 2W, which is sufficient to couple into the tuner of the receiver through the feed cable and cause sufficient interference to degrade the wanted signal beyond correction. By monitoring the BER output from the demodulator, if a call is initiated to a nearby handset and the BER from the satellite tuner exceeds the QEF free limit of 2e-04; then the receiver ignores the standard tuning mechanism taken from the PID data and forces the LNB into high band/low band and tunes to the wanted channel +/- the additional offset. The monitoring method can be:-
1. Tune to channel
2. Monitor BER
3. If less than 2e-04 stay tuned, repeat step 2
4. Else (BER>2e-04, because of an interferer)
5. Switch LNB to alternative band
6. Tube to new frequency
7. Monitor BER

If the broadcast data receiver is connected to programmable or multiband LNB then the same monitoring principles are used but the following describes the same in more detail.

The monitoring system cites LNB described with two Local Oscillators (LO) frequencies, 9.75GHz and 10.6GHz. This allows for a certain amount of interference avoidance but relies upon the LNB being operated outside of the specified band for IF. To overcome this problem a programmable LNB can be used. This has either tuneable LO's that could be shifted in frequency or 3 or more fixed LO's that could be used to tune to the wanted signal whilst keeping the IF in band, i.e. in between 950-2150MHz. In this situation the wanted channel would be tuned to and the BER from the demodulator monitored. If the BER exceeds 2e-04 the LNB would either be pre-programmed to a wanted channel +/- a fixed offset or another LNB band would be used whilst maintaining the requirement of using an IF of 950MHz - 2150MHz. The tuner would then be tuned to the new IF. This would be checked to see if it remains within the band 950MHz - 2150MHz, if so, the BER is monitored to ensure it is below 2e-04 or less than the previous BER. An algorithm similar to above is used.
1. Tune to channel
2. Monitor BER
3. If less than 2e-04 stay tuned, repeat step 2
4. Else (BER>2e-04, because of an interferer)
5. Switch LNB to alternative band/Re-program LNB by - fixed offset
6. Is IF>950MHz<2150MHz
7. If so tune to new frequency
8. Monitor BER
9. Is BER less than 2e-04
10. Repeat 8, else
11. Switch LNB to 3^{rd} band/Re-program LNB by 2*- fixed offset
12. Is IF>950MHz<2150MHz
13. If so tune to new frequency
14. Monitor BER

For either fixed LNB's or re-programmable LNB's there would be sufficient overlap to cover the whole IF range of 950MHz-2150MHz

Where re-programmable LNB's are used the offset would start at a nominal frequency greater than the channel bandwidth, and then increase in steps either side of the wanted channel until the received signal was determined of sufficiently good quality.

Thus, in accordance with the invention, the user of the broadcast data receiver who would normally be faced with a poor signal during periods of interference, in which typically picture degradation would occur, can be provided with an improved service. Thus, in a practical embodiment, and using conventional LNB's, 11508MHz Horizontal tp D3S 27.5Msps CR/23. This currently uses low band, which puts the channel at 1758MHz, which is a handset frequency for Orange and T-Mobile. By using high band the channel is shifted to 908MHz, therefore avoiding interference from Orange and T-mobile GSM system.

Alternatively, using three bands within an LNB would mean that the third LNB is provided at 10.175GHz and the previous example signal shifted to 1333MHz which is moved away from the GSM DECT and WLAN products, therefore avoiding known interference.

Yet further, if a programmable LNB is used then if programmed with a fixed offset valve of 50MHz, the new frequency would be 1708MHz which is just outside the GSM band. Using the method of the invention, the bit error rate may still be relatively poor, i.e. above the predefined level so that the LNB may be shifted by 2x50MHz moving the intermediate frequency to 1658MHz which is further away from all known potential interference apparatus and at this stage the bit error rate will be reduced below the predefined level.

## Claims

1. Apparatus for the reception of data transmitted to the apparatus over any of a range of radio frequency signals within a known frequency band or bands, said radio frequency signal selectable by the apparatus in response to a user selection of a television or radio channel to be generated by the apparatus from the received data, said apparatus including a tuner to tune to the selected radio frequency signal and **characterised in that** the bit error rate output of the data carried by the selected radio frequency signal is monitored and, if the said bit error rate exceeds, during reception, a predefined bit error rate limit, a control means introduces an offset frequency value for the selected radio frequency signal and the apparatus is then operated to tune to a frequency equivalent to the selected radio frequency signal plus or minus said offset frequency value.

2. Apparatus according to claim 1 **characterised in that** upon retuning to the frequency including the offset frequency value, the bit error rate is monitored and if the bit error rate value is within the predefined bit error rate limit the tuner continues to tune to the frequency value including the offset frequency value.

3. Apparatus according to claim 1 **characterised in that** the predefined bit error rate limit is 2e-04.

4. Apparatus according to claim 1 **characterised in that** the tuner is controlled to tune to radio frequencies within the DVB IF band for satellite tuners.

5. Apparatus according to claim 1 **characterised in that** the bit error rate of the selected radio frequency signal is caused to exceed the predefined bit error rate limit by interference caused by any or any combination of GSM or DECT devices, WLAN devices and/or devices which operate in the surrounding environment at a relatively close radio frequency to the selected radio frequency.

6. Apparatus according to claim 1 **characterised in that** the apparatus includes at least one LNB.

7. Apparatus according to claim 6 **characterised in that** upon receiving a selected radio frequency signal and the bit error rate exceeding the predefined bit error rate limit, the LNB is controlled to move from receiving a selected radio frequency signal within a low band frequency range to receiving a frequency located in a high band frequency range or vice versa.

8. Apparatus according to claim 6 **characterised in that** the LNB is multiband or programmable and upon the bit error rate of a selected frequency signal exceeding the predefined bit error rate limit, the LNB is controlled to receive a frequency equivalent to the selected radio frequency signal plus or minus a fixed offset frequency value.

9. Apparatus according to claim 6 **characterised in that** upon the bit error rate of a selected frequency signal exceeding the predefined bit error rate limit, another LNB frequency range band is used whilst maintaining the requirement of using an Intermediate frequency band between 950MHz to 2150MHz.

10. Apparatus according to claim 1 **characterised in that** the offset frequency value is initially set at a first value and added or subtracted from the original frequency and the apparatus re-tuned to the new frequency.

11. Apparatus according to claim 10 **characterised in that** if the bit error rate still exceeds the predefined level then successive increases in the offset value are made, the apparatus re-tuned and the bit error rate re-checked at each increase and this is continued until the bit error rate is at or below the predefined bit error rate limit.

12. Apparatus according to claim 1 **characterised in that** the apparatus includes a broadcast data receiver provided to receive the data on the selected radio frequency signal, decode the same and use the data to generate video and /or audio for the selected television or radio channel to which the selected radio frequency is related.

13. Apparatus for the reception of data, said data transmitted to the apparatus at a range of radio frequency signals within a known frequency band or bands, said radio frequency signals selectable by the apparatus in response to a user selecting, said apparatus including a tuner to tune to the selected signal and wherein the bit error rate output is monitored and, if the said bit error rate exceeds, during operation, a predefined limit, the apparatus introduces an offset to the required frequency and tunes to the wanted frequency plus or minus said offset.

14. A method for the control of apparatus to tune to a selected radio frequency signal in a range of receivable radio frequency signals to receive data carried by the said signal, said method comprising the steps of;
selecting the radio frequency signal to be received as that which carries data required for the generation of a user selected radio or television channel;
controlling the apparatus to tune to said selected radio frequency signal;
when tuned and the selected frequency signal is received, monitoring the bit error rate output of the data received from the selected radio frequency and **characterised in that**;
if the said bit error rate output is the same or less than a predefined bit error rate limit the apparatus continues to receive the selected radio frequency signal; and
if the said bit error rate output is greater than a predefined bit error rate limit, control means for the apparatus introduces an offset frequency value to the selected radio frequency signal and the apparatus is then operated to tune to a radio frequency equivalent to the selected radio frequency signal plus or minus said offset frequency value.

15. A method according to claim 14 **characterised in that** upon retuning to the frequency including the offset frequency value, the bit error rate is monitored and if the bit error rate value is within the predefined bit error rate limit the tuner continues to tune to the frequency value including the offset frequency value.

16. A method according to claim 15 **characterised in that** if the bit error rate still exceeds the predefined bit error rate limit then successive increases in the offset value are made, the apparatus re-tuned and the bit error rate re-checked at each increase and this is continued until the bit error rate is at or less than the predefined bit error rate value.

17. A method according to claim 14 **characterised in that** the predefined bit error rate limit is 2e-04.

18. A method according to claim 14 **characterised in that** upon receiving a selected radio frequency signal and the bit error rate exceeding the predefined bit error rate limit, an LNB provided as apart of the signal receiving apparatus is controlled to move from receiving a selected radio frequency signal within a low band frequency range to receiving a frequency located in a high band frequency range or vice versa.

19. A method according to claim 18 **characterised in that** the LNB is multiband or programmable and upon the bit error rate of a selected frequency signal exceeding the predefined bit error rate limit, the LNB is controlled to receive a frequency equivalent to the selected radio frequency signal plus or minus a fixed offset frequency value.
